# EUROPEAN PATENT SPECIFICATION

(11) **EP 2 873 588 B1**
(45) Date of publication and mention of the grant of the patent: **05.07.2017**
(21) Application number: 14813244.2
(22) Date of filing: 15.05.2014
(51) Int. Cl.: B62B 7/06, B62B 7/08, B62B 7/14

(54) **STROLLER**
KINDERWAGEN
POUSSETTE

(30) Priority: 20.06.2013 CN 201310247689
(43) Date of publication of application: 20.05.2015
(73) Proprietor: UNITRONTECH ZHUHAI Co. Ltd., Zuhai City, Guangdong Province (CN)
(72) Inventor: LIU, Xiuping, Zhuhai Guangdong 519015 (CN)
(74) Representative: Westphal, Mussgnug & Partner Patentanwälte mbB
(86) International application number: PCT/CN2014/077560
(87) International publication number: WO 2014/201926

(56) References cited:
- EP-A1- 2 368 784
- WO-A1-2007/099121
- CN-A- 101 734 271
- CN-U- 203 318 472
- CN-Y- 201 313 571
- CN-Y- 201 325 470
- DE-U1-202007 011 019
- TW-U- M 359 454

## Description

### Field of the Invention

The invention relates to the technical field of strollers, and in particular to a stroller.

### Background of the Invention

At present, safety requirement on a stroller in the global market has been becoming increasingly high. In the past, it only required not nipping or shearing hands in a static state, but now it requires preventing a frame from nipping or shearing hands during both dynamic processes of folding and unfolding the frame. All strollers folded by using a connecting rod for connecting a frame currently available in the market have the risk of nipping and shearing hands by the frame during the folding and unfolding processes.

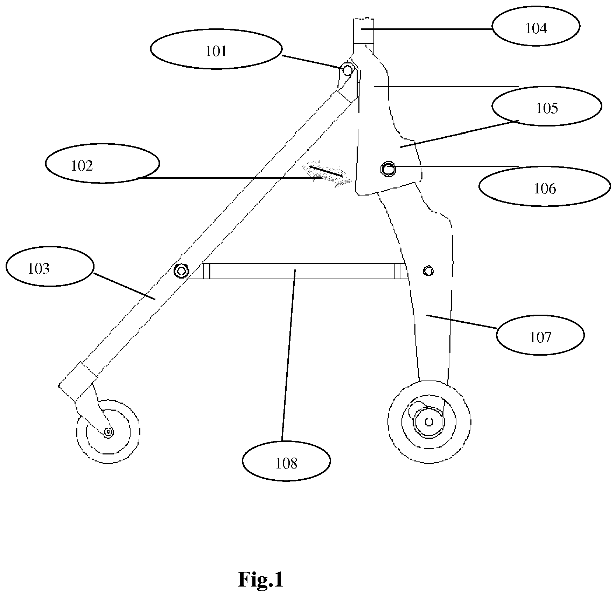

Fig. 1 is a stroller foldable by turning a handgrip pipe toward a front foot pipe available in the existing market. Such a stroller foldable by turning the handgrip pipe toward the front foot pipe has an elongated folding joint 105 with a pivot point 101 at the upper end and a pivot point 106 at the lower end, a rear foot pipe 107 being provided with a pivot point, a front foot pipe 103 being provided with a pivot point, and a handgrip pipe 104 being provided with no pivot point and being fixedly connected with the folding joint 105 at the lower end, wherein the pivot point 101 at the upper end of the folding joint 105 is movably connected pivotally with the pivot point on the front foot pipe 103 by a pivot shaft, and the pivot point 106 at the lower end of the folding joint 105 is movably connected pivotally with the pivot point on the rear foot pipe 107 by a pivot shaft; and the opposite ends of a connecting rod 108 respectively pivot the front foot pipe and the rear foot pipe together. When the handgrip pipe 104 turns and rotates toward the front foot pipe 103 to fold the frame, the folding joint 105 fixedly connected with the handgrip pipe 104 is caused to rotate about the pivot point 101 with the front foot pipe 103, and at the same time, the pivot point 106 at the lower end of the folding joint 105 is caused to rotate about the pivot point with the rear foot pipe 107, and the rear foot pipe 107 is tilted up; and the connecting rod 108 pulls the rear foot pipe 107 to rotate about the pivot point 106 at the lower end of the folding joint 105, so that the rear foot pipe 107 approaches the front foot pipe 103, synchronously achieving the function of folding the frame in such a manner that the handgrip pipe 104 approaches the front foot pipe, and the rear foot pipe 107 approaches the front foot pipe 103.

Such a stroller folding frame structure has considerable hand nipping and shearing gaps during folding and unfolding of the frame, causing safety risk to children and users due to a large "scissors gap" between the lower end of the folding joint and the front foot pipe when the frame is unfolded, and considerable "scissors gaps" between the connecting rod and the front and rear foot pipes while the connecting rod approaches the front foot pipe and the rear foot pipe when the frame is folded. Thus, there is a need for a novel stroller.

Document CN 201 325 470 Y shows a stroller according to the preamble of claim 1, wherein a linkage of two rods (8, 9) joined together at a sliding piece connects the handgrip pipe to the rear foot pipe.

### Summary of the Invention

In view of the above, the technical problem to be solved by the invention as defined in claim 1 is providing a stroller, a folding joint of which is formed by pivoting an upper joint, a rear joint, a lower joint and a joint connecting rod.

A stroller comprises a frame having two states, an unfolded state and a folded state, front wheel set arranged at the front lower part of the frame, rear wheel set arranged at the rear lower part of the frame, and frame locking mechanisms for locking the frame in a unfolded position; the frame comprises a handgrip pipe, a front foot pipe, a rear foot pipe and a joint assembly; the joint assembly comprises an upper joint, a rear joint, a lower joint and a joint connecting rod; the upper joint is fixedly connected with the handgrip pipe, and the upper joint is provided with a first pivot point and a second pivot point; the rear joint is fixedly connected with the rear foot pipe, and the rear joint is provided with a third pivot point and a fourth pivot point; the lower joint is fixedly connected with the front foot pipe, and the lower joint is provided with a fifth pivot point and a sixth pivot point; a first pivot shaft passes through the fifth pivot point and the first pivot point, and pivotally connects the lower joint with the upper joint; a second pivot shaft passes through the sixth pivot point and the fourth pivot point, and pivotally connects the lower joint with the rear joint; and the opposite ends of the joint connecting rod are pivoted on the second pivot point and to the third pivot point respectively, wherein during the process of folding or unfolding the frame, the handgrip pipe causes the upper joint to rotate about the first pivot shaft, and the joint connecting rod causes the rear joint and the rear foot pipe to rotate about the second pivot shaft, so that the rear foot pipe approaches or moves away from the front foot pipe.

Preferably, the distance between the upper joint and the rear joint is larger than the safety gap threshold set forth in stroller safety standards in the state where the first pivot shaft passes through the fifth pivot point and the first pivot point; the opposite ends of the joint connecting rod are pivoted on the second pivot point and on the third pivot point respectively; and the second pivot shaft passes through the sixth pivot point and the fourth pivot point.

Preferably, the joint connecting rod is arranged between the lower joint and the upper joint, and is in contact with side surfaces of the lower joint and the upper joint respectively, wherein the lower joint, the upper joint and the rear joint all have arc-shaped edges.

Preferably, the lower part of the upper joint is arc-shaped, and an arc-shaped blocking component is arranged at the lower part of the upper joint, the width of the arc-shaped blocking component being larger than that of the arc-shaped edge of the lower joint, wherein during rotation of the upper joint toward the rear foot pipe about the first pivot shaft, the surface of the arc-shaped edge of the lower joint is in contact with the surface of the arc-shaped blocking component, so that the handgrip pipe is restricted in a set position.

Preferably, the frame locking mechanism comprises a locking pin, a first elastic element, a second elastic element, a front foot pipe plug, a traction piece, an unlocking pedal and a locking pin blocker; the front foot pipe plug is arranged in the front foot pipe, and is arranged opposite to the lower end of the upper joint; a guide slot is arranged at the upper part of the front foot pipe plug, and the locking pin is arranged in the guide slot, and the first elastic element is arranged between the bottom of the guide slot and the locking pin; the lower end of the locking pin is fixedly connected with one end of the traction piece, and the other end of the traction piece passes through a through hole arranged at the bottom of the guide slot and the rear foot pipe, and is fixedly connected with the unlocking pedal which is pivoted on the rear foot pipe; a notch is arranged at the upper end of the front foot pipe plug, and the locking pin blocker is mounted in the notch; the upper end of the locking pin blocker is arranged opposite to the lower end of the upper joint, and a projecting first blocking part is arranged at the lower end of the upper joint; the middle segment of the locking pin blocker and the second elastic element are movably pivoted on the front foot pipe plug by a third pivot shaft, and one end of the second elastic element is fixedly connected with the locking pin blocker; a boss blocking portion is arranged at the upper part of the middle segment of the locking pin, and a first escape groove and a second escape groove are arranged on opposite sides of the boss blocking portion respectively, wherein the second escape groove is closer to the first elastic piece than the first escape groove; the upper end of the locking pin is an arc-shaped bevel, and is provided with a second blocking part matched with the first blocking part; wherein during unfolding of the frame, the first blocking part is in contact with the arc-shaped bevel at the upper end of the locking pin, and compresses the first elastic piece; after the first blocking part passes the arc-shaped bevel at the upper end of the locking pin, the first blocking part jacks up the upper end of the locking pin blocker, and the locking pin blocker overcomes elastic force of the second elastic element and rotates about the third pivot shaft, and the lower end of the locking pin blocker approaches the locking pin; when the frame is fully unfolded, under the elastic action of the first elastic piece, the locking pin projects out, and clamps the first blocking part between the upper end of the locking pin blocker and the second blocking part, and the lower end of the locking pin blocker is located in the second escape groove; and during folding of the frame, the traction piece is pulled to compress the first elastic piece, so that the locking pin retracts into the guide slot; after being pulled and overcoming frictional resistance between the boss blocking portion and the lower end of the locking pin blocker, the lower end of the locking pin blocker falls into the first escape groove, and the boss blocking portion is blocked by the lower end of the locking pin blocker, to restrict the locking pin from projecting out, so that the upper joint is rotatable; and wherein the upper joint is rotated, so that the upper joint releases blocking of the upper end of the locking pin blocker, and the locking pin blocker rotates about the third pivot shaft under the elastic action of the second elastic element, so that the lower end of the locking pin blocker moves away from the boss blocking portion, and the locking pin is released and bounces out under the action of the first elastic element.

Preferably, a slotted hole is formed in the middle segment of the locking pin, and a fourth pivot shaft passes through the slotted hole and is fixedly connected with the front foot pipe plug, wherein the retracting stroke of the locking pin is the length of the slotted hole.

Preferably, the frame further comprises a seat support assembly comprising a reversing seat bayonet, a bayonet support base and a bayonet support connecting rod; the reversing seat bayonet and the bayonet support base are pivoted on the lower joint by a fifth pivot shaft, and the bayonet support base is arranged between the reversing seat bayonet and the lower joint; the reversing seat bayonet and the bayonet support base are both rotatable about the fifth pivot shaft; the opposite ends of the bayonet support connecting rod are pivoted on the bayonet support base and the rear foot pipe respectively; and a support part is arranged on a side surface of the reversing seat bayonet, and the support part is matched with a support point arranged on the front foot pipe; in a fully unfolded state of the frame, the support point supports the support part, so that the reversing seat bayonet is not rotatable; the bayonet support base is provided with a first positioning hole and a second positioning hole, and a clamping pin of a reversing seat is provided with a positioning post matched with the first positioning hole and the second positioning hole; wherein the second positioning hole is a closed positioning hole, and the first positioning hole is an open hole of which the side wall is open, and the open hole and the reversing seat bayonet are combined to form a closed positioning hole; and in the state where the reversing seat is inserted into the reversing seat bayonet toward the rear foot pipe, and the positioning post is clamped into the second positioning hole, during folding of the frame, the rear foot pipe drives the bayonet support base by means of the bayonet support connecting rod to rotate about the pivot point with the lower joint, and the second positioning hole locks the positioning post, so that the clamping pin of the reversing seat turns toward the rear foot pipe along with the bayonet support base. In the state where the reversing seat is inserted into the reversing seat bayonet toward the front foot pipe, and the positioning post is clamped into the first positioning hole, during folding of the frame, the rear foot pipe approaches the front foot pipe, and the rear foot pipe drives the bayonet support base by means of the bayonet support connecting rod to rotate about the pivot point with the lower joint, so that the bayonet support base drives the reversing seat bayonet to rotate toward the rear foot pipe, and the support point of the front foot pipe moves away from the support part of the reversing seat bayonet, and the reversing seat bayonet is movable relative to the reversing seat.

Preferably, the upper joint, the rear joint, the lower joint and the joint connecting rod are made of high-strength plastic parts, steel or aluminum alloy. The joint connecting rod may also be a flexible steel guy wire.

Preferably, the handgrip pipe, the front foot pipe and the rear foot pipe are all made of steel or aluminum alloy, wherein the handgrip pipe, the front foot pipe and the rear foot pipe are all integrally formed or bending formed pipes.

Based on the above technical solution, the invention has the advantages as follows:
The stroller of the invention overcomes the shortcoming that an existing handgrip pipe may nip hands when it turns forwards to fold the frame, so that consumers will not be injured due to nipping and shearing hands during the processes of folding and unfolding the frame.

### Description of the Drawings

The drawings illustrated here are intended for providing further understanding of the invention and are part of the application, and the exemplary embodiments of the invention and description thereof are used for illustrating the invention, instead of improperly limiting the invention. In the drawings:
Fig. 1 is a schematic diagram of a stroller foldable by turning a handgrip pipe toward a front foot pipe in the prior art with the risk of nipping and shearing hands, wherein reference numbers in Fig. 1 include: 101 - pivot point, 102 - dangerous gap,103 - front foot pipe, 104 - handgrip pipe, 105 - folding joint, 106 -pivot point, 107- rear foot pipe, 108-connecting rod;
Fig. 2 is a front view of a frame according to an embodiment of a stroller of the invention;
Fig. 3 is an exploded view of a folding joint assembly according to an embodiment of a stroller of the invention;
Fig. 4 is a side view of a process of folding the frame by turning a handgrip pipe forwards according to an embodiment of a stroller of the invention;
Fig. 5 is a side view where the handgrip pipe is turned forwards to fold the frame to close according to an embodiment of a stroller of the invention;
Fig. 6 is a sectional schematic view where an upper joint jacks up a locking pin blocker and is blocked by a locking pin when the frame is unfolded according to an embodiment of a stroller of the invention;
Fig. 7 is a sectional schematic view where a traction piece is pulled to release the locking pin to block the upper joint according to an embodiment of a stroller of the invention;
Fig. 8 is a sectional view where the handgrip pipe is turned forwards so that the upper joint releases the locking pin blocker and the locking pin blocker releases the locking pin according to an embodiment of a stroller of the invention;
Fig. 9 is an exploded view of a seat support assembly according to an embodiment of a stroller of the invention;
Fig. 10 is a sectional view of the seat support assembly according to an embodiment of a stroller of the invention;
Fig. 11 is a schematic view of the seat support assembly where a support point of a front foot pipe supports a reversing seat bayonet when the frame is fully unfolded according to an embodiment of a stroller of the invention;
Figs. 12, 13 and 14 are schematic views of a process where the handgrip pipe is turned forwards to drive a rear foot pipe to cause a bayonet support base to rotate and release the reversing seat bayonet according to an embodiment of a stroller of the invention;
Fig. 15 is a schematic view where a reversing seat clamping pin is inserted into the reversing seat bayonet toward the front foot pipe according to an embodiment of a stroller of the invention;
Fig. 16 is a schematic view where a clamping pin positioning post is inserted into an open positioning hole after the reversing seat is inserted into the reversing seat bayonet by a clamping pin toward the front foot pipe according to an embodiment of a stroller of the invention;
Fig. 17 is a schematic view where the clamping pin positioning post is inserted into the open positioning hole after the reversing seat clamping pin is inserted into the reversing seat bayonet toward the front foot pipe according to an embodiment of a stroller of the invention;
Fig. 18 is a schematic view where the reversing seat is inserted into the reversing seat bayonet by a clamping pin toward a rear foot pipe according to an embodiment of a stroller of the invention;
Fig. 19 is a schematic view where the clamping pin positioning post is inserted into a closed positioning hole after the reversing seat is inserted into the reversing seat bayonet by a clamping pin toward the rear foot pipe according to an embodiment of a stroller of the invention;
Fig. 20 is a schematic view where the reversing seat is inserted into the reversing seat bayonet toward the front foot pipe to fold the frame according to an embodiment of a stroller of the invention; and
Fig. 21 is a partial sectional schematic view of the locking pin, an elastic element, the locking pin blocker, a front foot pipe plug and the traction piece according to an embodiment of a stroller of the invention.

### Detailed Description of the Embodiments

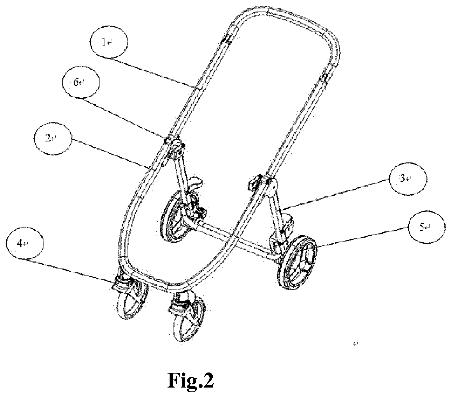

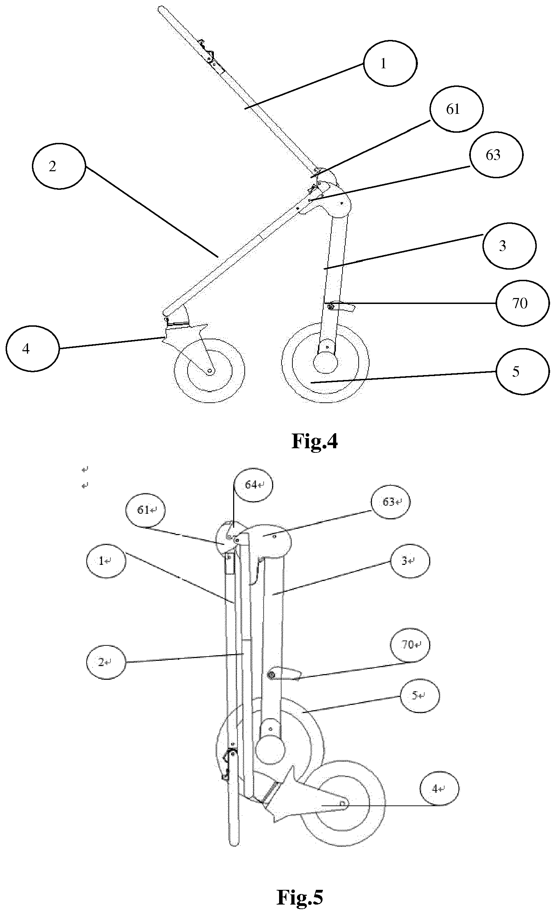

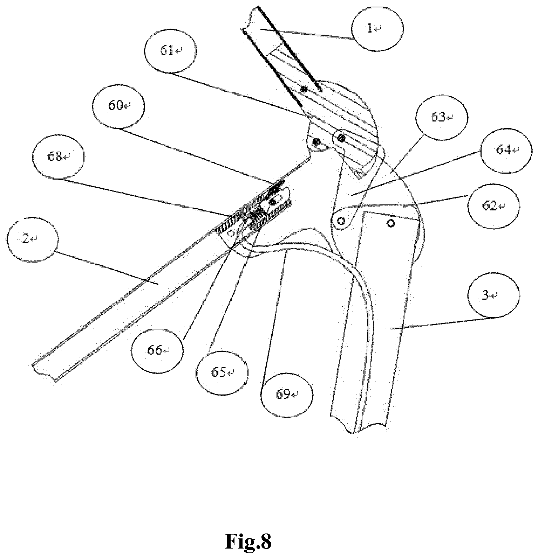

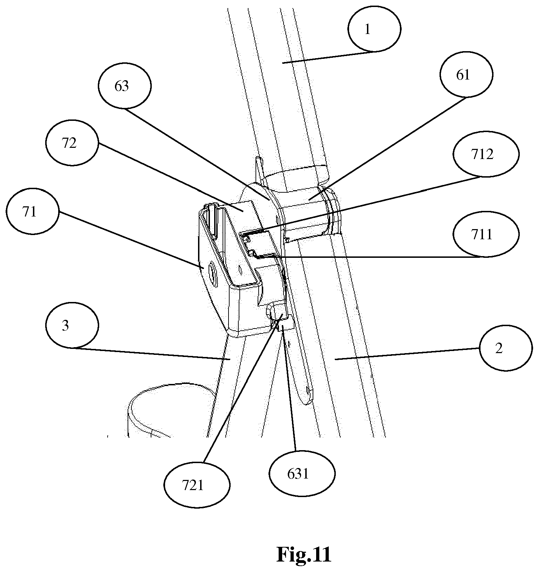

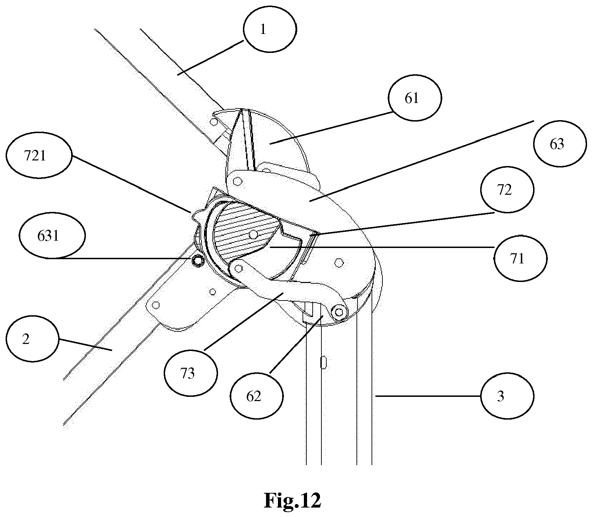

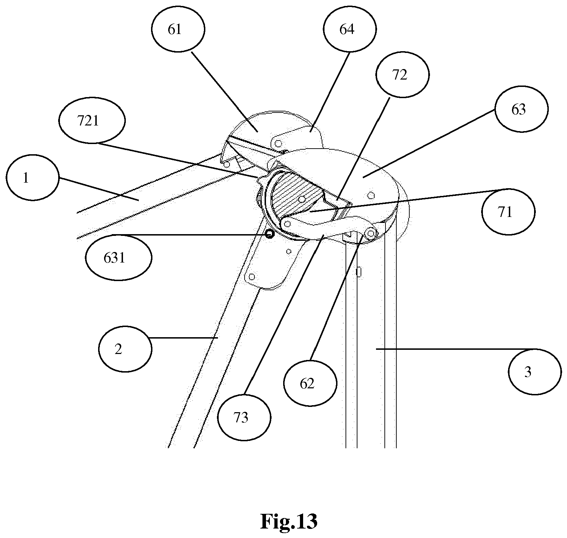

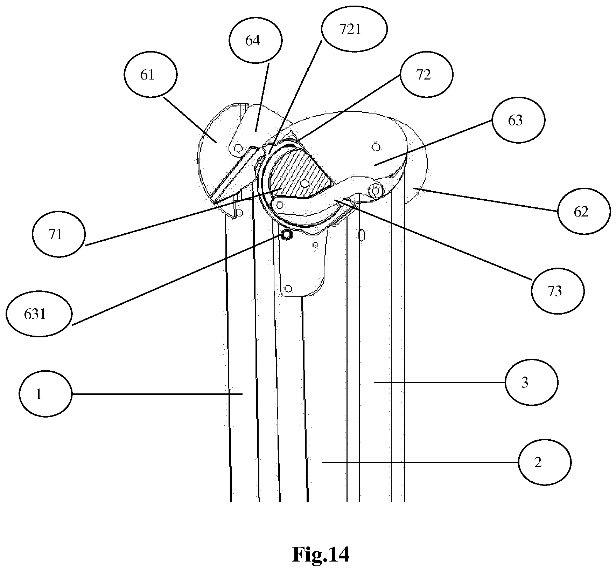

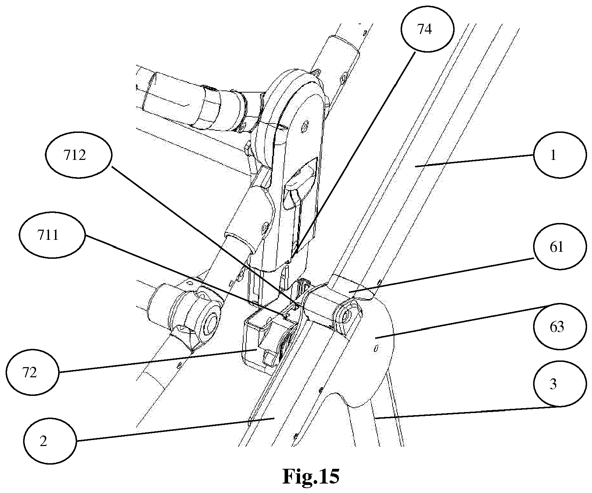

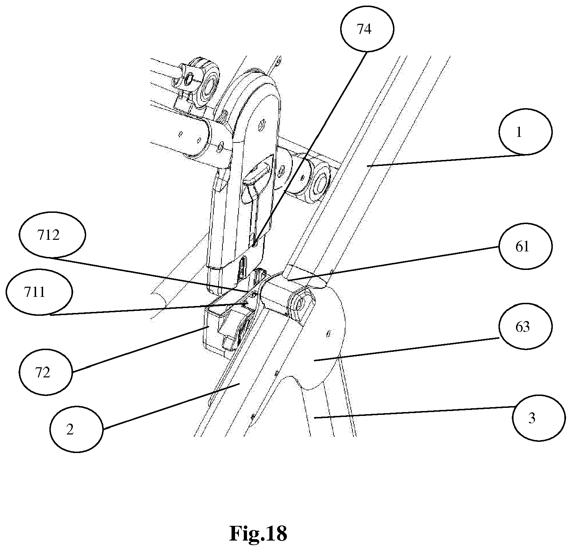

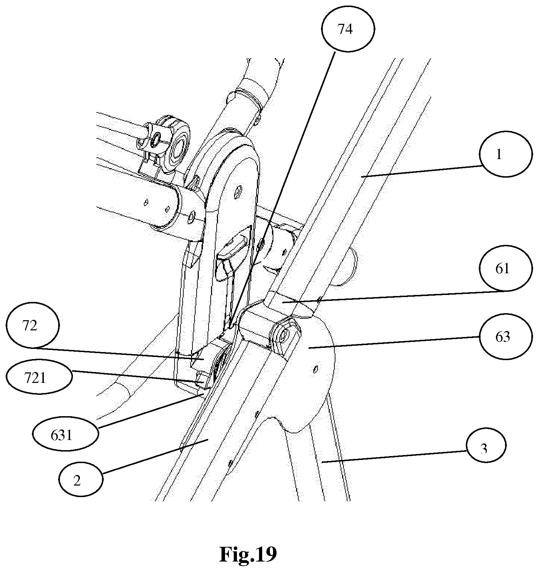

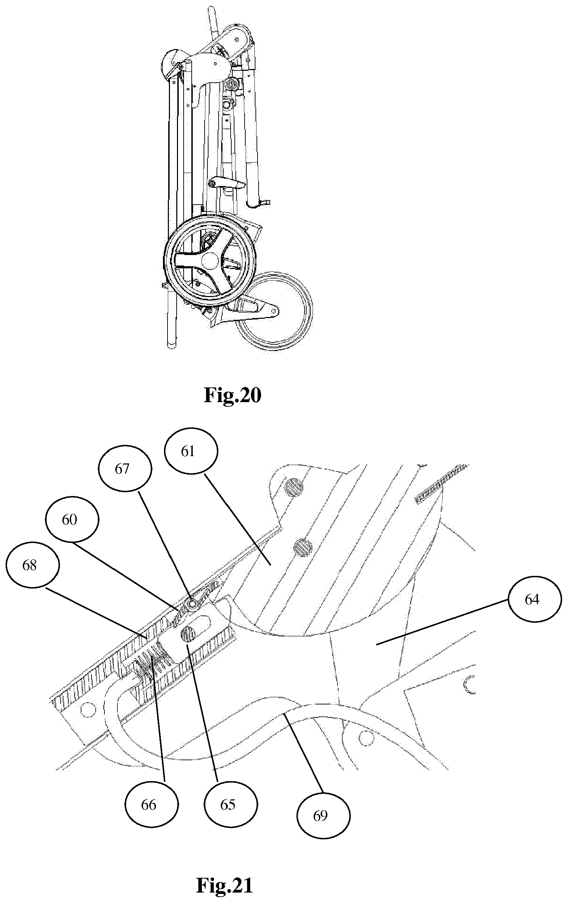

Referring to Figs. 2-21, the technical solution of the invention is further described in detail through the drawings and the embodiments.

First referring to Fig. 2, a stroller comprises a frame having two states, an unfolded state and a folded state, front wheel sets 4 arranged at the front lower part of the frame, rear wheel sets 5 arranged at the rear lower part of the frame, and frame locking mechanisms for locking the frame in a unfolded position. The front wheel sets 4, the rear wheel sets 5 and the frame locking mechanisms are all provided in pairs and arranged symmetrically.

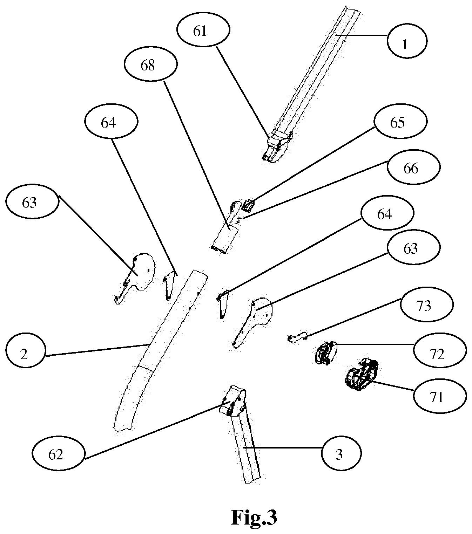

As shown in Figs. 3, 4 and 5, the frame comprises a handgrip pipe 1, a front foot pipe 2, a rear foot pipe 3 and joint assemblies 6. Each of the joint assemblies 6 comprises an upper joint 61, a rear joint 62, a lower joint 63 and a joint connecting rod 64.

The upper joint 61 is fixedly connected with the handgrip pipe 1, by way of threaded connection, buckled connection, etc., and the upper joint 61 is provided with a first pivot point A and a second pivot point B. The rear joint 62 is fixedly connected with the rear foot pipe 3, and the rear joint 62 is provided with a third pivot point C and a fourth pivot point D. The lower joint 63 is fixedly connected with the front foot pipe 2, and the lower joint 63 is provided with a fifth pivot point E and a sixth pivot point F.

A first pivot shaft passes through the fifth pivot point E and the first pivot point A, and pivotally connects the lower joint 63 with the upper joint 61. A second pivot shaft passes through the sixth pivot point F and the fourth pivot point D, and pivotally connects the lower joint 63 with the rear joint 62. The opposite ends of the joint connecting rod 64 are pivoted on the second pivot point B and to the third pivot point C respectively. Pivoting means providing pivot holes respectively, and pivotally connecting components by a pivot shaft.

During the process of folding or unfolding the frame, the handgrip pipe 1 causes the upper joint 61 to rotate about the first pivot shaft, and the joint connecting rod 64 causes the rear joint 62 and the rear foot pipe 3 to rotate about the second pivot shaft, so that the rear foot pipe 3 approaches or moves away from the front foot pipe 2.

Wherein, when the handgrip pipe 1 is rotated toward the front foot pipe 2 to fold the frame, the upper joint 61 fixedly connected with the handgrip pipe 1 rotates about the pivot point A of the upper joint, and at the same time the rear joint 62 and the rear foot pipe 3 are driven by the joint connecting rod 64 to rotate about the pivot point D of the rear joint 62, and the rear foot pipe 3 is caused to approach the front foot pipe 2. During the process of unfolding the frame, the transmission relationship between the folding joint assemblies is just inverse to that during folding of the frame, and continuous folding without dangerous hand-nipping gaps can be achieved during both folding and unfolding of the frame.

According to an embodiment of the invention, the distance between the pivot point C and the pivot point D of the rear joint 62 is relatively large. After the pivot point A of the upper joint 61 is movably pivoted on the pivot point E of the lower joint 63, after the pivot point B of the upper joint 61 is movably pivoted on the pivot point C of the rear joint 62, and after the pivot point F of the lower joint 63 is movably pivoted on the pivot point D of the rear joint 62, the distance between the upper joint 61 and the rear joint 62 is larger than the safety gap threshold set forth in stroller safety standards.

The safety gap threshold of the invention set forth in stroller safety standards refers to a dangerous hand-nipping gap set forth in stroller safety standards established according to national standards or international standards.

The joint connecting rod 64 that connects the pivot point B of the upper joint 61 and the pivot point C of the rear joint 62 is closely attached to side surfaces of the lower joint 63 and the upper joint 61, and the surfaces of the lower joint 63, the upper joint 61 and the rear joint 62, corresponding to each other, are all arc-shaped.

The lower joint 63, the upper joint 61 and the rear joint 62 all have arc-shaped edges, and there is no dangerous hand-nipping gap at all between the folding joint assemblies during dynamic continuous folding and unfolding of the frame.

According to an embodiment of the invention, the folding joint assemblies are designed symmetrically at the left and right sides, the lower joint 63 and the joint connecting rod 64 of a folding joint assembly at each side being used symmetrically, and the folding joint assemblies are made of high-strength plastic parts or steel or aluminum alloy sheet metal parts.

According to an embodiment of the invention, no connecting rod is connected between the front foot pipe 2 and the rear foot pipe 3, avoiding the risk of shearing and nipping hands during folding and unfolding.

According to an embodiment of the invention, the lower part of the upper joint 61 is arc-shaped, and an arc-shaped blocking component is arranged at the lower part of the upper joint 61, the width of the arc-shaped blocking component being larger than that of the arc-shaped edge of the lowerjoint 63. Wherein, during rotation of the upper joint 61 toward the rear foot pipe 3 about the first pivot shaft, the surface of the arc-shaped edge of the lower joint 63 is in contact with the surface of the arc-shaped blocking component, so that the handgrip pipe 1 is restricted in a set position.

The operating principle of the stroller of the invention is as follows: when the handgrip pipe is rotated toward the front foot pipe to fold the frame, the upper joint fixedly connected with the handgrip pipe rotates about the pivot point A of the upper joint, and at the same time the rear joint and the rear foot pipe are driven by the joint connecting rod to rotate about the pivot point D of the rear joint, and the rear foot pipe is caused to approach the front foot pipe; and during the process of unfolding the frame, the transmission relationship between the folding joint assemblies is just inverse to that during folding of the frame, and continuous folding without dangerous hand-nipping gaps can be achieved during both folding and unfolding of the frame.

The joint connecting rod that connects the pivot point of the upper joint 2 and the pivot point of the rear joint 1 is closely attached to side surfaces of the lower joint and the upper joint, and the surfaces of the lower joint, the upper joint and the rear joint, corresponding to each other, are all arc-shaped, so there is no dangerous hand-nipping gap at all between the upper joint, the lower joint and the rear joint during dynamic continuous folding and unfolding of the frame. A connecting rod is no longer needed to be connected between the front foot pipe and the rear foot pipe, avoiding the risk of shearing and nipping hands during folding and unfolding of the frame.

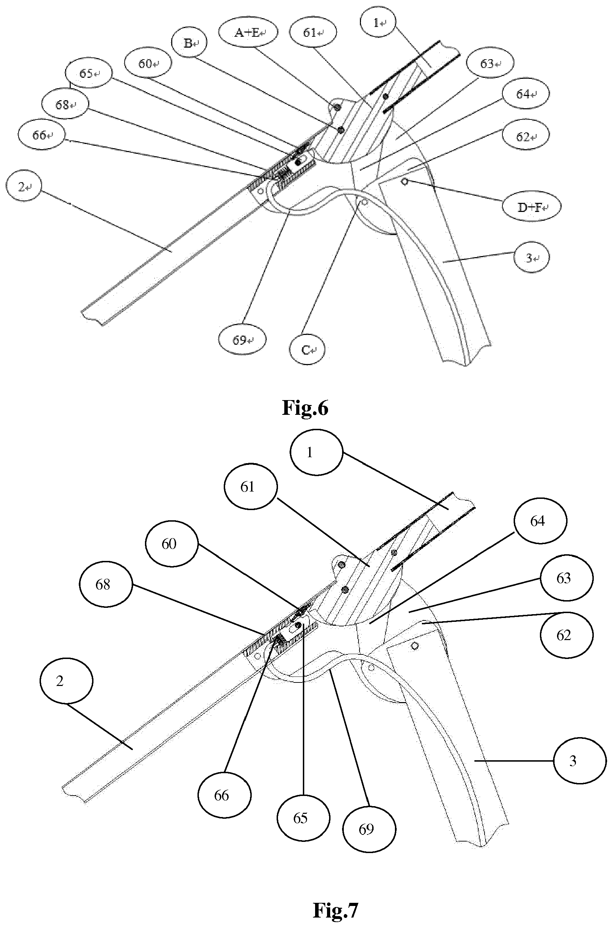

As shown in Figs. 6, 7, 8 and 21, the frame locking mechanism comprises a locking pin 65, a first elastic element 66, a second elastic element 67, a front foot pipe plug 68, a traction piece 69, an unlocking pedal 70 and a locking pin blocker 60.

The front foot pipe plug 68 is arranged in the front foot pipe 2, and is arranged opposite to the lower end of the upper joint 61; and a guide slot is arranged at the upper part of the front foot pipe plug 68, and the locking pin 65 is arranged in the guide slot, and the first elastic element 66 is arranged between the bottom of the guide slot and the locking pin 65.

The lower end of the locking pin 65 is fixedly connected with one end of the traction piece 69, and the other end of the traction piece 69 passes through a through hole arranged at the bottom of the guide slot and the rear foot pipe 3, and is fixedly connected with the unlocking pedal 70, which is pivoted on the rear foot pipe 3.

A notch is arranged at the upper end of the front foot pipe plug 68, and the locking pin blocker 60 is mounted in the notch. The upper end of the locking pin blocker 60 is arranged opposite to the lower end of the upper joint 61, and a projecting first blocking part is arranged at the lower end of the upper joint 61.

The middle segment of the locking pin blocker 60 and the second elastic element 67 are movably pivoted on the front foot pipe plug 68 by a third pivot shaft, and one end of the second elastic element 67 is fixedly connected with the locking pin blocker 60.

A boss blocking portion is arranged at the upper part of the middle segment of the locking pin 65, and a first escape groove and a second escape groove are arranged on opposite sides of the boss blocking portion respectively, wherein the second escape groove is closer to the first elastic piece 66 than the first escape groove;

The upper end of the locking pin 65 is an arc-shaped bevel, and is provided with a second blocking part matched with the first blocking part.

During unfolding of the frame, the first blocking part is in contact with the arc-shaped bevel at the upper end of the locking pin 65, and compresses the first elastic piece 66. After the first blocking part passes the arc-shaped bevel at the upper end of the locking pin 65, the first blocking part jacks up the upper end of the locking pin blocker 60, and the locking pin blocker 60 overcomes elastic force of the second elastic element 67 and rotates about the third pivot shaft, and the lower end of the locking pin blocker 60 approaches the locking pin 65.

When the frame is fully unfolded, under the elastic action of the first elastic piece 66, the locking pin 65 projects out and just falls on the clamping surface at the lower end of the upper joint 61, and clamps the first blocking part between the upper end of the locking pin blocker 60 and the second blocking part; the lower end of the locking pin blocker 60 falls into the second escape groove of the locking pin 65; and the locking pin 65 blocks the upper joint 61 so that it can not rotate upwards about the pivot point with the lower joint 63, that is, upward rotation of the upper joint 61 is restricted by the clamping surface of the locking pin 65, and at the same time downward rotation of the upper joint 61 is blocked by the wider arc-shaped blocking part, thus locking the frame.

To fold the frame, the traction piece 69 is pulled to compress the first elastic piece 66, so that the locking pin 65 retracts into the guide slot; after being pulled and overcoming frictional resistance between the boss blocking portion of the locking pin 65 and the lower end of the locking pin blocker 60, the lower end of the locking pin blocker 60 falls into the first escape groove at one side of the boss blocking portion of the locking pin 65, to restrict the locking pin 65 from projecting out, and at the same time the second blocking portion is separated from the first blocking portion, so that the upper joint 61 enters an unblocked rotatable state. However, since the upper joint 61 is not rotated, the lower end of the upper joint 61 still abuts against the upper end of the locking pin blocker 60, so that the lower end of the locking pin blocker 60 continues blocking the boss blocking portion of the locking pin 65, wherein the upper joint 61 is rotated so that the upper joint 61 releases blocking of the upper end of the locking pin blocker 60, and the locking pin blocker 60 rotates about the third pivot shaft under the elastic action of the second elastic element 67, so that the lower end of the locking pin blocker 60 moves away from the boss blocking portion, and the locking pin 65 is released, bounces out under the action of the first elastic element 66, and returns to a set position. The second elastic element 67 can be a torsional spring or an elastic sheet.

According to an embodiment of the invention, a slotted hole is formed in the middle of the middle segment of the locking pin 65, and a fourth pivot shaft passes through the slotted hole and is fixedly connected with the front foot pipe plug 68, wherein the retracting stroke of the locking pin 65 is the length of the slotted hole.

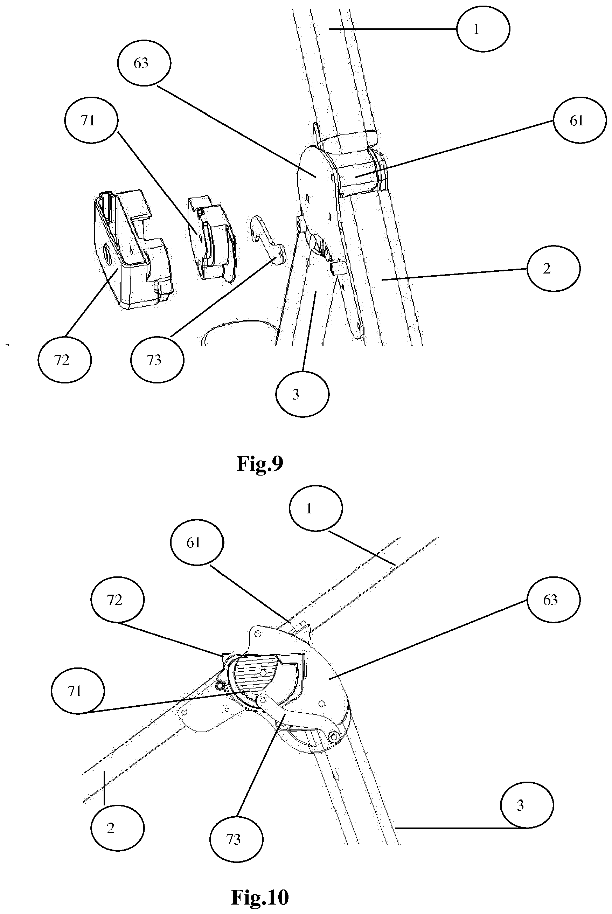

As shown in Figs. 9-20, a seat support assembly comprises a reversing seat bayonet 72, a bayonet support base 71 and a bayonet support connecting rod 73. The reversing seat bayonet 72 and the bayonet support base 71 are pivoted on the lower joint 63 by the third pivot shaft, and the bayonet support base 71 is arranged between the reversing seat bayonet 72 and the lower joint 63. The reversing seat bayonet 72 and the bayonet support base 71 are both rotatable about the third pivot shaft.

The opposite ends of the bayonet support connecting rod 73 are pivoted on the bayonet support base 71 and the rear foot pipe 3 respectively. A support part 721 is arranged on a side surface of the reversing seat bayonet 72, and the support part 721 is matched with a support point 631 arranged on the front foot pipe 2.

In a fully unfolded state of the frame, the support point 631 supports the support part 721, so that the reversing seat bayonet 72 is not rotatable. The bayonet support base 71 is provided with a first positioning hole 711 and a second positioning hole 712, and a clamping pin of a reversing seat is provided with a positioning post 74 matched with the first positioning hole 711 and the second positioning hole 712.

Wherein, the second positioning hole 712 is a closed positioning hole, and the first positioning hole 711 is an open hole of which the side wall is open, and the open hole and the reversing seat bayonet 72 are combined to form a closed positioning hole.

In the state where the reversing seat is inserted into the reversing seat bayonet 72 toward the rear foot pipe, and the positioning post 74 is clamped into the second positioning hole 712, during folding of the frame, the rear foot pipe 3 drives the bayonet support base 71 with the bayonet support connecting rod 73 to rotate about the pivot point with the lower joint 63, and the second positioning hole 712 locks the positioning post 74, so that the clamping pin of the reversing seat turns to the direction of the rear foot pipe 3 along with the bayonet support base 71.

In the state where the reversing seat is inserted into the reversing seat bayonet 72 toward the front foot pipe, and the positioning post 74 is clamped into the first positioning hole 711, during folding of the frame, the rear foot pipe 3 approaches the front foot pipe 2, and the rear foot pipe 3 drives the bayonet support base 71 by means of the bayonet support connecting rod 73 to rotate about the pivot point with the lower joint 63, so that the bayonet support base 71 drives the reversing seat bayonet 72 to rotate toward the rear foot pipe 3, and the support point 631 of the front foot pipe 2 moves away from the support part 721 of the reversing seat bayonet 72; and since the first positioning hole 711 is an open hole of which the side wall is open, and the reversing seat bayonet 72 rotates, the reversing seat bayonet 72 is movable relative to the reversing seat, which automatically approaches the front foot pipe due to its own weight.

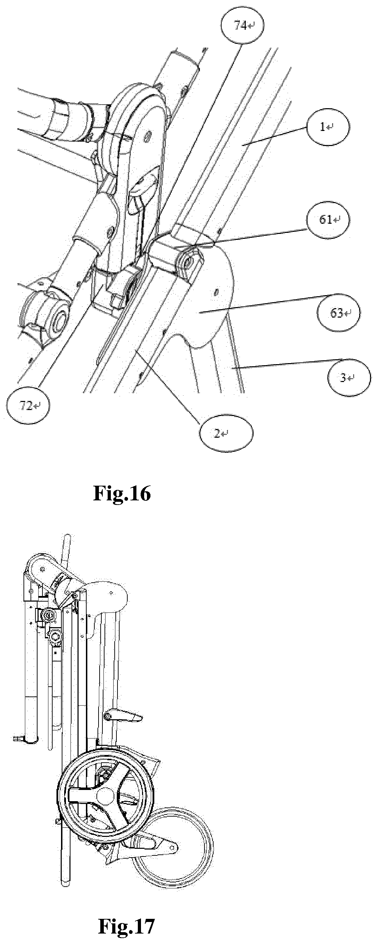

As shown in Fig. 17, after the reversing seat is inserted into the reversing seat bayonet toward the front foot pipe, the frame is folded, and the bayonet support connecting rod drives the bayonet support base to rotate, so that the reversing seat bayonet moves away from the support point of the front foot pipe and enters a movable state, and after a backrest of the reversing seat is turned forwards, the gravity center of the reversing seat is shifted forwards, so that the movable reversing seat bayonet rotates forwards.

As shown in the figure, after the reversing seat is inserted into the reversing seat bayonet toward the front foot pipe, the frame is folded, and the bayonet support connecting rod drives the bayonet support base to rotate; and since the positioning hole of the bayonet support base drives the positioning post of the reversing seat clamping pin into motion, so that the reversing seat bayonet rotates toward the rear foot pipe along with the reversing seat support base, the backrest of the reversing seat approaches the rear foot pipe after turning backwards and being folded.

According to an embodiment of the invention, the handgrip pipe, the front foot pipe and the rear foot pipe are all made of steel or aluminum alloy, wherein the handgrip pipe, the front foot pipe and the rear foot pipe are all formed by bending an integrally formed pipe.

The terms "first", "second", etc. in the invention are only used for differentiation in description, without special meanings.

The terms "upper end", "lower end", "front", "rear", etc. in the invention are descriptive words corresponding to orientation of the accompanying drawings in the specification.

The stroller of the invention overcomes the shortcoming of nipping hands, and ensures that consumers will not be injured due to nipping and shearing hands during folding and unfolding of the frame.

Finally it should be noted that the above embodiments are only intended for illustrating instead of limiting the technical solution of the invention; although the invention is described in detail with reference to the preferred embodiments, a person of ordinary skill in the art should understand that specific implementations of the invention can be modified or some technical features can be substituted equivalently; and such modifications and substitutions should also be covered by the scope of the technical solution claimed by the invention as long as they do not depart from the scope of the technical solution of the invention as defined by the claims.

## Claims

1. A stroller, comprising a frame having two states, an unfolded state and a folded state, a front wheel set (4) arranged at the front lower part of the frame, a rear wheel set (5) arranged at the rear lower part of the frame, and frame locking mechanisms for locking the frame in an unfolded position, the frame comprising a handgrip pipe (1), a front foot pipe (2), a rear foot pipe (3) and a joint assembly (6), the joint assembly (6) comprising an upper joint (61), a rear joint (62), a lower joint (63) and a joint connecting rod (64); the upper end of the upper joint (61) being fixedly connected with the handgrip pipe (1), and the upper joint (61) being provided with a first pivot point (A) and a second pivot point (B); the lower end of the rear joint (62) being fixedly connected with the rear foot pipe (3), and the rear joint (62) being provided with a third pivot point (C) and a fourth pivot point (D); the lower joint (63) being fixedly connected with the front foot pipe (2), and the lower joint (63) being provided with a fifth pivot point (E) and a sixth pivot point (F); a first pivot shaft passing through the fifth pivot point (E) and the first pivot point (A), and pivotally connecting the lower joint (63) with the upper joint (61); a second pivot shaft passing through the sixth pivot point (F) and the fourth pivot point (D), and pivotally connecting the lower joint (63) with the rear joint (62); wherein during the process of folding or unfolding the frame, the handgrip pipe (1) causes the upper joint (61) to rotate about the first pivot shaft, and the joint connecting rod (64) causes the rear joint (62) and the rear foot pipe (3) to rotate about the second pivot shaft, so that the rear foot pipe (3) approaches or moves away from the front foot pipe (2), **characterized in that** the opposite ends of the joint connecting rod (64) are pivoted on the second pivot point (B) and to the third pivot point (C) respectively.

2. The stroller according to claim 1, **characterized in that** the distance between the upper joint (61) and the rear joint (62) is larger than the safety gap threshold set forth in stroller safety standards in the state where the first pivot shaft passes through the fifth pivot point (E) and the first pivot point (A) and the opposite ends of the joint connecting rod (64) are pivoted on the second pivot point (B) and on the third pivot point (C) respectively, and the second pivot shaft passes through the sixth pivot point (F) and the fourth pivot point (D).

3. The stroller according to claim 2, **characterized in that** the joint connecting rod (64) is arranged between the lower joint (63) and the upper joint (61), and is in contact with the lower joint (63) and the upper joint (61) respectively, wherein the lower joint (63), the upper joint (61) and the rear joint (62) all have arc-shaped edges.

4. The stroller according to claim 3, **characterized in that** the lower part of the upper joint (61) is arc-shaped, and an arc-shaped blocking component is arranged at the lower part of the upper joint (61), the width of the arc-shaped blocking component being larger than that of the arc-shaped edge of the lower joint (63), wherein during rotation of the upper joint (61) toward the rear foot pipe (3) about the first pivot shaft, the surface of the arc-shaped edge of the lower joint (63) is in contact with the surface of the arc-shaped blocking component, so that the handgrip pipe (1) is restricted in a set position.

5. The stroller according to claim 1, **characterized in that** the frame locking mechanism comprises a locking pin (65), a first elastic element (66), a second elastic element (67), a front foot pipe plug (68), a traction piece (69), an unlocking pedal (70) and a locking pin blocker (60); the front foot pipe plug (68) is arranged in the front foot pipe (2), and is arranged opposite to the lower end of the upper joint (61); a guide slot is arranged at the upper part of the front foot pipe plug (68), and the locking pin (65) is arranged in the guide slot, and the first elastic element (66) is arranged between the bottom of the guide slot and the locking pin (65); the lower end of the locking pin (65) is fixedly connected with one end of the traction piece (69), and the other end of the traction piece (69) passes through a through hole arranged at the bottom of the guide slot and the rear foot pipe (3), and is fixedly connected with the unlocking pedal (70) which is pivoted on the rear foot pipe (3); a notch is arranged at the upper end of the front foot pipe plug (68), and the locking pin blocker (60) is mounted in the notch; the upper end of the locking pin blocker (60) is arranged opposite to the lower end of the upper joint (61), and a projecting first blocking part is arranged at the lower end of the upper joint (61); the middle segment of the locking pin blocker (60) and the second elastic element (67) are movably pivoted on the front foot pipe plug (68) by a third pivot shaft, and one end of the second elastic element (67) is fixedly connected with the locking pin blocker (60); a boss blocking portion is arranged at the upper part of the middle segment of the locking pin (65), and a first escape groove and a second escape groove are arranged on opposite sides of the boss blocking portion respectively, wherein the second escape groove is closer to the first elastic piece (66) than the first escape groove; the upper end of the locking pin (65) is an arc-shaped bevel, and is provided with a second blocking part matched with the first blocking part; wherein during unfolding of the frame, the first blocking part is in contact with the arc-shaped bevel at the upper end of the locking pin (65), and compresses the first elastic piece (66); after the first blocking part passes the arc-shaped bevel at the upper end of the locking pin (65), the first blocking part jacks up the upper end of the locking pin blocker (60), and the locking pin blocker (60) overcomes elastic force of the second elastic element (67) and rotates about the third pivot shaft, and the lower end of the locking pin blocker (60) approaches the lower end of the locking pin (65); when the frame is fully unfolded, under the elastic action of the first elastic piece (66), the locking pin (65) projects out, and clamps the first blocking part between the upper end of the locking pin blocker (60) and the second blocking part, and the lower end of the locking pin blocker (60) is located in the second escape groove; and during folding of the frame, the traction piece (69) is pulled to compress the first elastic piece (66), so that the locking pin (65) retracts into the guide slot; after being pulled and overcoming frictional resistance between the boss blocking portion of the locking pin (65) and the lower end of the locking pin blocker (60), the lower end of the locking pin blocker (60) falls into the first escape groove, and the boss blocking portion is blocked by the lower end of the locking pin blocker (60) to restrict the locking pin (65) from projecting out, so that the upper joint (61) is rotatable; and wherein the upper joint (61) is rotated to release blocking of the locking pin blocker (60), and the locking pin blocker (60) rotates about the third pivot shaft under the elastic action of the second elastic element (67), so that the lower end of the locking pin blocker (60) moves away from the boss blocking portion, and the locking pin (65) is released and bounces out under the action of the first elastic element (66).

6. The stroller according to claim 5, **characterized in that** a slotted hole is formed in the middle segment of the locking pin (65), and a fourth pivot shaft passes through the slotted hole and is fixedly connected with the front foot pipe plug (68), wherein the retracting stroke of the locking pin (65) is the length of the slotted hole.

7. The stroller according to claim 1, **characterized in that** the frame further comprises a seat support assembly including a reversing seat bayonet (72), a bayonet support base (71) and a bayonet support connecting rod (73); the reversing seat bayonet (72) and the bayonet support base (71) are pivoted on the lower joint (63) by a fifth pivot shaft, and the bayonet support base (71) is arranged between the reversing seat bayonet (72) and the lower joint (63); the reversing seat bayonet (72) and the bayonet support base (71) are both rotatable about the fifth pivot shaft; the opposite ends of the bayonet support connecting rod (73) are pivoted on the bayonet support base (71) and the rear foot pipe (3) respectively; and a support part (721) is arranged on a side surface of the reversing seat bayonet (72), and the support part (721) is matched with a support point (631) arranged on the front foot pipe (2), wherein in a fully unfolded state of the frame, the support point (631) supports the support part (721), so that the reversing seat bayonet (72) is not rotatable; the bayonet support base (71) is provided with a first positioning hole (711) and a second positioning hole (712), and a clamping pin of a reversing seat is provided with a positioning post (74) matched with the first positioning hole (711) and the second positioning hole (712); wherein the second positioning hole (712) is a closed positioning hole, and the first positioning hole (711) is an open hole of which the side wall is open, and the open hole and the reversing seat bayonet (72) are combined to form a closed positioning hole; in the state where the reversing seat is inserted into the reversing seat bayonet (72) and the positioning post (74) is clamped into the second positioning hole (712), during folding of the frame, the rear foot pipe (3) drives the bayonet support base (71) by means of the bayonet support connecting rod (73) to rotate about the pivot point with the lower joint (63), and the second positioning hole (712) locks the positioning post (74), so that the clamping pin of the reversing seat turns to the direction of the rear foot pipe (3) along with the bayonet support base (71); in the state where the reversing seat is inserted into the reversing seat bayonet (72), and the positioning post (74) is clamped into the first positioning hole (711), during folding of the frame, the rear foot pipe (3) approaches the front foot pipe (2), and the rear foot pipe (3) drives the bayonet support base (71) by means of the bayonet support connecting rod (73) to rotate about the pivot point with the lower joint (63), so that the bayonet support base (71) drives the reversing seat bayonet (72) to rotate toward the rear foot pipe (3), so that the support point (631) of the front foot pipe (2) moves away from the support part (721) of the reversing seat bayonet (72), and the reversing seat bayonet (72) is movable relative to the reversing seat, which automatically approaches the front foot pipe (2) due to its own weight.

8. The stroller according to claim 2, **characterized in that** the upper joint (61), the rear joint (62), the lower joint (63) and the joint connecting rod (64) are made of high-strength plastic parts, steel or aluminum alloy.

9. The stroller according to claim 1, **characterized in that** the handgrip pipe, the front foot pipe and the rear foot pipe are all made of steel or aluminum alloy, wherein the handgrip pipe, the front foot pipe and the rear foot pipe are all integrally formed pipes.

## Patentansprüche

1. Sport-Kinderwagen, der ein Gestell mit zwei Zuständen, einem aufgeklappten Zustand und einem zusammengeklappten Zustand, einen Vorderradsatz (4), der am vorderen unteren Teil des Gestells angeordnet ist, einen Hinterradsatz (5), der am hinteren unteren Teil des Gestells angeordnet ist, und Gestellverriegelungsmechanismen zum Arretieren des Gestells in einer aufgeklappten Stellung aufweist, wobei das Gestell ein Griffrohr (1), ein vorderes Fußrohr, ein hinteres Fußrohr (3) und eine Gelenkanordnung (6) aufweist, wobei die Gelenkanordnung (6) ein oberes Gelenk (61), ein hinteres Gelenk (62), ein unteres Gelenk (63) und eine Gelenkverbindungsstange (64) aufweist; das obere Ende des oberen Gelenks (61) fest mit dem Griffrohr (1) verbunden ist und das obere Gelenk (61) mit einem ersten Drehpunkt (A) und einem zweiten Drehpunkt (B) versehen ist; das untere Ende des hinteren Gelenks (62) fest mit dem hinteren Fußrohr (3) verbunden ist und das hintere Gelenk (62) mit einem dritten Drehpunkt (C) und einem vierten Drehpunkt (D) versehen ist; das untere Gelenk (63) fest mit dem vorderen Fußrohr (2) verbunden ist und das untere Gelenk (63) mit einem fünften Gelenkpunkt (E) und einem sechsten Gelenkpunkt (F) versehen ist; eine erste Schwenkwelle durch den fünften Drehpunkt (E) und den ersten Drehpunkt (A) verläuft und das untere Gelenk (63) schwenkbar mit dem oberen Gelenk (61) verbindet; eine zweite Schwenkwelle durch den sechsten Drehpunkt (F) und den vierten Drehpunkt (D) verläuft und das untere Gelenk (63) schwenkbar mit dem hinteren Gelenk (62) verbindet; wobei während des Verlaufs des Zusammen- oder Aufklappens des Gestells das Griffrohr (1) das Drehen des oberen Gelenks (61) um die erste Schwenkwelle veranlasst und die Gelenkverbindungsstange (64) das Drehen des hinteren Gelenks (62) und des hinteren Fußrohrs (3) um die zweite Schwenkwelle veranlasst, sodass das hintere Fußrohr (3) sich (von) dem vorderen Fußrohr (2) nähert oder weg bewegt, **dadurch gekennzeichnet, dass** die entgegengesetzten Enden der Gelenkverbin-dungsstange (64) am zweiten Drehpunkt (B) bzw. dem dritten Drehpunkt (C) angelenkt sind.

2. Sport-Kinderwagen nach Anspruch 1,
**dadurch gekennzeichnet, dass**
die Entfernung zwischen dem oberen Gelenk (61) und dem hinteren Gelenk (62) in dem Zustand, in dem die erste Schwenkwelle durch den fünften Drehpunkt (E) und den ersten Drehpunkt (A) verläuft und die entgegengesetzten Enden der Gelenkverbindungsstange (64) am zweiten Drehpunkt (B) bzw. am dritten Drehpunkt (C) angelenkt sind und die zweite Schwenkwelle durch den sechsten Drehpunkt (F) und den vierten Drehpunkt (D) verläuft, größer als der in Sicherheitsnormen für Sport-Kinderwagen festgelegte Sicherheitsabstandsschwellenwert ist.

3. Sport-Kinderwagen nach Anspruch 2,
**dadurch gekennzeichnet, dass**
die Gelenkverbindungsstange (64) zwischen dem unteren Gelenk (63) und dem oberen Gelenk (61) angeordnet ist und mit dem unteren Gelenk (63) bzw. dem oberen Gelenk (61) in Kontakt ist, wobei das untere Gelenk (63), das obere Gelenk (61) und das hintere Gelenk (62) alle bogenförmige Ränder haben.

4. Sport-Kinderwagen nach Anspruch 3,
**dadurch gekennzeichnet, dass**
der untere Teil des oberen Gelenks (61) bogenförmig ist und ein bogenförmiger Sperrteil an dem unteren Teil des oberen Gelenks (61) angeordnet ist, wobei die Breite des bogenförmigen Sperrteils größer ist als die des bogenförmigen Rands des unteren Gelenks (63), wobei die Oberfläche des bogenförmigen Rands des unteren Gelenks (63) während der Drehung des oberen Gelenks (61) um die erste Schwenkwelle in Richtung auf das hintere Fußrohr (3) mit der Oberfläche des bogenförmigen Sperrteils in Kontakt ist, sodass das Griffrohr (1) in einer bestimmten Stellung eingeschränkt ist.

5. Sport-Kinderwagen nach Anspruch 1,
**dadurch gekennzeichnet, dass**
der Gelenkverriegelungsmechanismus einen Sicherungsbolzen (65), ein erstes elastisches Element (66), ein zweites elastisches Element (67), einen Stopfen am vorderen Fußrohr (68), ein Zugstück (69), ein Entriegelungspedal (70) und eine Sicherungsbolzenblockierung (60) aufweist; der Stopfen am vorderen Fußrohr (68) im vorderen Fußrohr (2) angeordnet ist und gegenüber dem unteren Ende des oberen Gelenks (61) angeordnet ist; ein Führungsschlitz am oberen Teil des Stopfens am vorderen Fußrohr (68) angeordnet ist und der Sicherungsbolzen (65) im Führungsschlitz angeordnet ist und das erste elastische Element (66) zwischen dem Boden des Führungsbolzens und dem Sicherungsbolzen (65) angeordnet ist; das untere Ende des Sicherungsbolzens (65) fest mit einem Ende des Zugstücks (69) verbunden ist und das andere Ende des Zugstücks (69) durch ein am Boden des Führungsschlitzes angeordnetes Durchgangsloch und das hintere Fußrohr (3) verläuft und fest mit dem Entriegelungspedal (70) verbunden ist, das am hinteren Fußrohr (3) angelenkt ist; eine Aussparung am oberen Ende des Stopfens am vorderen Fußrohr (68) angeordnet ist und die Sicherungsbolzenblockierung (60) in der Aussparung sitzt; das obere Ende der Sicherungsbolzenblockierung (60) dem unteren Ende des oberen Gelenks (61) gegenüber angeordnet ist und ein vorstehender erster Blockierungsteil am unteren Ende des oberen Gelenks (61) angeordnet ist; das mittlere Segment der Sicherungsbolzenblockierung (60) und das zweite elastische Element (67) durch eine dritte Schwenkwelle beweglich am Stopfen am vorderen Fußrohr (68) angelenkt sind und ein Ende des zweiten elastischen Elements (67) fest mit der Sicherungsbolzenblockierung (60) verbunden ist; ein Vorsprungsblockierungsteil am oberen Teil des mittleren Segments des Sicherungsbolzens (65) angeordnet ist und an entgegengesetzten Seiten des Vorsprungsblockierungsteils eine erste Ausrastnut bzw. eine zweite Ausrastnut angeordnet sind, wobei die zweite Ausrastnut näher am ersten elastischen Stück (66) ist als die erste Ausrastnut; das obere Ende des Blockierungsbolzens (65) eine bogenförmige Schrägung ist und mit einem zweiten Blockierungsteil versehen ist, der mit dem ersten Blockierungsteil zusammenpasst; wobei während des Aufklappens des Gestells der erste Blockierungsteil mit der bogenförmigen Schrägung am oberen Ende des Blockierungsbolzens (65) in Kontakt ist und das erste elastische Stück (66) zusammendrückt; nachdem der erste Blockierungsteil an der bogenförmigen Schrägung am oberen Ende des Sicherungsbolzens (65) vorbeigeführt worden ist, der erste Blockierungsteil das obere Ende der Sicherungsbolzenblockierung (60) hebt und die Sicherungsbolzenblockierung (60) elastische Kraft des zweiten elastischen Elements (67) überwindet und sich um die dritte Schwenkwelle dreht und das untere Ende der Sicherungsbolzenblockierung (60) sich dem unteren Ende des Sicherungsbolzens (65) nähert; wenn das Gestell unter der elastischen Wirkung des ersten elastischen Stücks (66) ganz aufgeklappt worden ist, der Sicherungsbolzen (65) herausragt und den ersten Blockierungsteil zwischen dem oberen Ende der Sicherungsbolzenblockierung (60) und dem zweiten Blockierungsteil einspannt und das untere Ende der Sicherungsbolzenblockierung (60) in der zweiten Ausrastnut liegt; und während des Zusammenklappens des Gestells das Zugstück am Zugstück (69) gezogen wird, um das erste elastische Stück (66) zusammenzudrücken, sodass der Sicherungsbolzen (65) in den Führungsschlitz zurückgezogen wird; das untere Ende der Sicherungsbolzenblockierung (60), nachdem es gezogen wurde und den Reibschluss zwischen dem Vorsprungsblockierungsteil des Sicherungsbolzens (65) und dem unteren Ende der Sicherungsbolzenblockierung (60) überwunden hat, in die erste Ausrastnut einfällt und der Vorsprungsblockierungsteil vom unteren Ende der Sicherungsbolzenblockierung (60) blockiert wird, um den Sicherungsbolzen (65) am Herausragen zu hindern, sodass das obere Gelenk (61) gedreht werden kann; und wobei das obere Gelenk (61) gedreht wird, um die Blockierung der Sicherungsbolzenblockierung (60) aufzuheben, und die Sicherungsbolzenblockierung (60) sich unter der elastischen Wirkung des zweiten elastischen Elements (67) um die dritte Schwenkwelle dreht, sodass das untere Ende der Sicherungsbolzenblockierung (60) sich vom Vorsprungsblockierungsteil weg bewegt und der Sicherungsbolzen (65) unter der Wirkung des ersten elastischen Elements (66) ausgelöst wird und herausfedert.

6. Sport-Kinderwagen nach Anspruch 5,
**dadurch gekennzeichnet, dass**
im mittleren Segment des Sicherungsbolzens (65) ein Schlitzloch ausgebildet ist und eine vierte Schwenkwelle durch das Schlitzloch verläuft und fest mit dem Stopfen am vorderen Fußrohr (68) verbunden ist, wobei der Rückzugshub des Sicherungsbolzens (65) die Länge des Schlitzlochs hat.

7. Sport-Kinderwagen nach Anspruch 5,
**dadurch gekennzeichnet, dass**
das Gestell ferner eine Sitzträgeranordnung aufweist, die ein Wendesitzbajonett (72), eine Bajonettträgerbasis (71) und einen Bajonettträgerverbindungsstab (73) beinhaltet; das Wendesitzbajonett (72) und die Bajonettträgerbasis (71) durch eine fünfte Schwenkwelle am unteren Gelenk (63) angelenkt sind und die Bajonettträgerbasis (71) zwischen dem Wendesitzbajonett (72) und dem unteren Gelenk (63) angeordnet ist; das Wendesitzbajonett (72) und die Bajonettträgerbasis (71) beide um die fünfte Schwenkwelle drehbar sind; die entgegengesetzten Enden des Bajonettträgerverbindungsstabs (73) an der Bajonettträgerbasis (71) bzw. dem hinteren Fußrohr (3) angelenkt sind und ein Abstützteil (721) an einer Seitenfläche des Wendesitzbajonetts (72) angeordnet ist und der Abstützteil (721) mit einem an dem vorderen Fußrohr (2) angeordneten Abstützpunkt (631) zusammengepasst ist, der an dem vorderen Fußrohr (2) angeordnet ist, wobei der Abstützpunkt (631) in einem ganz aufgeklappten Zustand des Gestells den Abstützteil (621) stützt, sodass das Wendesitzbajonett (72) nicht drehbar ist; die Bajonettträgerbasis (71) mit einem ersten Positionierungsloch (711) und einem zweiten Positionierungsloch (712) versehen ist und ein Festspannbolzen eines Wendesitzes mit einem Positionierungsstück (74) versehen ist, das mit dem ersten Positionierungsloch (711) und dem zweiten Positionierungsloch (712) zusammenpasst; wobei das zweite Positionierungsloch (712) ein geschlossenes Positionierungsloch ist und das erste Positionierungsloch (711) ein offenes Loch ist, dessen Seitenwand offen ist, und das offene Loch und das Wendesitzbajonett (72) kombiniert werden, sodass sie ein geschlossenes Positionierungsloch bilden; in dem Zustand, in dem während des Zusammenklappens des Gestells der Wendesitz in das Wendesitzbajonett (72) gesteckt wird und das Positionierungsstück (74) in das zweite Positionierungsloch (712) geklemmt wird, das hintere Fußrohr (3) die Bajonettträgerbasis (71) mittels des Bajonettträgerverbindungsstabs (73) zum Drehen um den Drehpunkt mit dem unteren Gelenk (63) antreibt und das zweite Positionierungsloch (712) das Positionierungsstück (74) sichert, sodass der Festspannstift des Wendesitzes sich zusammen mit der Bajonettträgerbasis (71) in die Richtung des hinteren Fußrohrs (3) wendet; in dem Zustand, in dem der Wendesitz während des Zusammenklappens des Gestells in das Wendesitzbajonett (72) gesteckt wird und das Positionierungsstück (74) in das erste Positionierungsloch (711) geklemmt wird, das hintere Fußrohr (3) sich dem vorderen Fußrohr (2) nähert und das hintere Fußrohr (3) die Bajonettträgerbasis (71) mittels des Bajonettträgerverbindungsstabs (73) zum Drehen um den Drehpunkt mit dem unteren Gelenk (63) antreibt, sodass die Bajonettträgerbasis (71) das Wendesitzbajonett (72) zum Drehen zum hinteren Fußrohr (3) hin antreibt, sodass der Abstützpunkt (631) des vorderen Fußrohrs (2) sich vom Abstützteil (721) des Wendesitzbajonetts (72) weg bewegt und das Wendesitzbajonett (72) relativ zum Wendesitz bewegbar ist, der sich aufgrund seines Eigengewichts automatisch dem vorderen Fußrohr (2) nähert.

8. Sport-Kinderwagen nach Anspruch 2,
**dadurch gekennzeichnet, dass**
das obere Gelenk (61), das hintere Gelenk (62), das untere Gelenk (63) und die Gelenkverbindungsstange (64) aus hochfesten Plastikteilen, Stahl oder Aluminiumlegierung hergestellt sind.

9. Sport-Kinderwagen nach Anspruch 1,
**dadurch gekennzeichnet, dass**
das Griffrohr, das vordere Fußrohr und das hintere Fußrohr alle aus Stahl oder Aluminiumlegierung hergestellt sind, wobei das Griffrohr, das vordere Fußrohr und das hintere Fußrohr alle einstückig ausgebildete Rohre sind.

## Revendications

1. Poussette comprenant un cadre ayant deux états à savoir un état déployé et un état replié, un jeu de roues avant (4) monté à la partie inférieure avant du cadre, un jeu de roues arrières (5) monté à la partie inférieure arrière du cadre et des mécanismes de verrouillage du cadre permettant de bloquer le cadre en position déployée, le cadre comprenant un tube de manipulation (1), un tube de base avant (2), un tube de base arrière (3) et un ensemble de jointures (6), cet ensemble de jointures (6) comprenant une jointure supérieure (61), une jointure arrière (62), une jointure inférieure (63) et une barre de liaison de jointure (64), la partie supérieure de la jointure supérieure (61) étant reliée solidairement au tube de manipulation (1) et la jointure supérieure (61) étant équipée d'un premier point pivot (A) et d'un second point pivot (B), l'extrémité inférieure de la jointure arrière (62) étant reliée solidairement au tube de base arrière (3) et la jointure arrière (62) étant équipée d'un troisième point pivot (C) et d'un quatrième point pivot (D), la jointure inférieure (63) étant reliée solidairement au tube de base avant (2) et la jointure inférieure (63) étant équipée d'un cinquième point pivot (E) et d'un sixième point pivot (F), un premier arbre pivot passant au travers du cinquième point pivot (E) et du premier point pivot (A) et permettant d'articuler la jointure inférieure (63) et la jointure supérieure (61), un second arbre pivot passant au travers du sixième point pivot (F) et du cinquième point pivot (D) et permettant d'articuler la jointure inférieure (63) et la jointure arrière (62), au cours du procédé de repliement ou de déploiement du cadre, le tube de manipulation (1) provoquant la rotation de la jointure supérieure (61) autour du premier axe pivot et la barre de liaison de jointure (64) provoquant la rotation de la jointure arrière (62) et du tube de base arrière (3) autour du second arbre pivot de sorte que le tube de base arrière (3) s'approche ou s'éloigne du tube de base avant (2),
**caractérisé en ce que**
les extrémités opposées de la barre de liaison de jointure (64) pivotent respectivement autour du second point pivot (B) et autour du troisième point pivot (C).

2. Poussette conforme à la revendication 1,
**caractérisée en ce que**
la distance entre la jointure supérieure (61) et la jointure arrière (62) est plus grande que le seuil de l'intervalle de sécurité recommandé par les normes de sécurité des poussettes, dans l'état dans lequel le premier arbre pivot passe au travers du cinquième point pivot (E) et du premier point pivot (A), les extrémités opposées de la barre de liaison de jointure (64) sont respectivement déplacées par pivotement autour du second point pivot (B) et autour du troisième point pivot (C) et le second arbre pivot passe au travers du sixième point pivot (F) et du quatrième point pivot (D).

3. Poussette conforme à la revendication 2,
**caractérisée en ce que**
la barre de liaison de jointure (64) est située entre la jointure inférieure (63) et la jointure supérieure (61) et est respectivement en contact avec la jointure inférieure (63) et la jointure supérieure (61), la jointure inférieure (63), la jointure supérieure (61) et la jointure arrière (62) ayant toutes des bords en forme d'arc.

4. Poussette conforme à la revendication 3,
**caractérisée en ce que**
la partie inférieure de la jointure supérieure (61) est en forme d'arc et un élément de blocage en forme d'arc est monté à la partie inférieure de la jointure supérieure (61), la largeur de l'élément de blocage en forme d'arc étant supérieure à celle du bord en forme d'arc de la jointure inférieure (63), et au cours de la rotation de la jointure supérieure (61) vers le tube de base arrière (3) autour du premier arbre pivot, la surface du bord en forme d'arc de la jointure inférieure (63) est en contact avec la surface de l'élément de blocage en forme d'arc de sorte que le tube de manipulation (1) soit limité à une position fixe.

5. Poussette conforme à la revendication 1,
**caractérisée en ce que**
le mécanisme de verrouillage du cadre comprend une broche de verrouillage (65), un premier élément élastique (66), un second élément élastique (67), un tampon du tube de base avant (68), une pièce de traction (69), une pédale de déverrouillage (70) et un élément de blocage de la broche de verrouillage (60), le tampon du tube de base avant (68) étant situé dans le tube de base avant (2) à l'opposé de l'extrémité inférieure de la jointure supérieure (61), une fente de guidage étant située à la partie supérieure du tampon du tube de base avant (68) la broche de verrouillage (65) étant située dans la fente de guidage, le premier élément élastique (66) étant situé entre la partie inférieure de la fente de guidage et la broche de verrouillage (65), l'extrémité inférieure de la broche de verrouillage (65) étant reliée solidairement à une extrémité de la pièce de traction (69) et l'autre extrémité de la pièce de traction (69) passant au travers d'un perçage traversant situé à la partie inférieure de la fente de guidage, le tube de base arrière (3) étant relié solidairement à la pédale de déverrouillage (70) qui est déplacée par pivotement sur le tube de base arrière (3), une entaille étant située à l'extrémité supérieure du tampon du tube de pied avant (68) et l'élément de blocage de la broche de verrouillage (60) étant monté dans cette entaille, l'extrémité supérieure de l'élément de blocage de la broche de verrouillage (60) étant située à l'opposé de l'extrémité inférieure de la jointure supérieure (61) et une première partie de blocage en saillie étant située à l'extrémité inférieure de la jointure supérieure (61), le segment médian de l'élément de blocage de la broche de verrouillage (60) et le second élément élastique (67) pouvant être déplacés par pivotement autour du tampon du tube de base avant (68) par un troisième arbre pivot, une extrémité du second élément élastique (67) étant reliée solidairement à l'élément de blocage de la broche de verrouillage (60), une partie de blocage en saillie étant située à la partie supérieure du segment médian de la broche de verrouillage (65) et une première rainure d'échappement et une seconde rainure d'échappement étant respectivement situées sur les côtés opposés de la partie de blocage en saillie, la seconde rainure d'échappement étant plus proche de la première pièce élastique (66) que la première rainure d'échappement, l'extrémité supérieure de la broche de verrouillage (65) étant un biseau en forme d'arc et étant équipée d'une seconde partie de blocage appariée à la première partie de blocage, au cours du déploiement du cadre, la première partie de blocage étant en contact avec le biseau en forme d'arc situé à l'extrémité supérieure de la broche de verrouillage (65) et comprimant la première pièce élastique (66), après que la première partie de verrouillage ait passé le biseau en forme d'arc situé à l'extrémité supérieure de la broche de verrouillage (65), la première partie de blocage levant l'extrémité supérieure de l'élément de blocage de la broche de verrouillage (60) et l'élément de blocage de la broche de verrouillage (60) surmontant la force élastique du second élément élastique (67) et tournant autour du troisième arbre pivot, l'extrémité inférieure de l'élément de blocage de la broche de verrouillage (60) s'approchant de l'extrémité inférieure de la broche de verrouillage (65), lorsque le cadre est totalement déployé, sous l'action élastique de la première pièce élastique (66), la broche de verrouillage (65) étant projetée vers l'extérieur et serrant la première partie de blocage entre l'extrémité supérieure de l'élément de blocage de la broche de verrouillage (60) et la seconde partie de blocage et l'extrémité inférieure de l'élément de blocage de la broche de verrouillage (60) étant située dans la seconde rainure d'échappement, et, au cours du repliement du cadre, la pièce de traction (69) étant poussée pour comprimer la première pièce élastique (66) de sorte que la broche de verrouillage (65) se rétracte dans la fente de guidage, après avoir été poussée et avoir surmonté la résistance de friction entre la partie de blocage en saillie de la broche de verrouillage (65) et l'extrémité inférieure de l'élément de blocage de la broche de verrouillage (60), l'extrémité inférieure de l'élément de blocage de la broche de verrouillage (60) tombant dans la première rainure d'échappement de la partie de blocage en saillie étant bloquée par l'extrémité inférieure de l'élément de blocage de la broche de verrouillage (60) pour empêcher la broche de verrouillage (65) d'être projetée vers l'extérieur de sorte que la jointure supérieure (61) puisse tourner, la jointure supérieure (61) étant déplacée en rotation pour libérer le blocage de l'élément de blocage de la broche de verrouillage (60), l'élément de blocage de la broche de verrouillage (60) tournant autour du troisième arbre pivot sous l'action de la force de rappel du second élément élastique (67) de sorte que l'extrémité inférieure de l'élément de blocage de la broche de verrouillage (60) s'éloigne de la partie de blocage en saillie, et la broche de verrouillage (65) étant libérée et rebondissant vers l'extérieur sous l'action du premier élément élastique (66).

6. Poussette conforme à la revendication 5,
**caractérisée en ce qu'**
un perçage oblong est formé dans le segment médian de la broche de verrouillage (65) et un quatrième arbre pivot passe au travers de ce perçage oblong et est solidairement relié au tampon du tube de base avant (68), la course de rétraction de la broche de verrouillage (65) correspondant à la longueur du perçage oblong.

7. Poussette conforme à la revendication 1,
**caractérisée en ce que**
le cadre comporte en outre un ensemble support de siège comprenant une baïonnette de siège réversible (72), une base support de baïonnette (71) et une barre de liaison du support de baïonnette (73), la baïonnette de siège réversible (72) et la base support de baïonnette (71) étant déplacées par pivotement autour de la jointure inférieure (63) par un cinquième arbre pivot, la base support de baïonnette (71) étant située entre la baïonnette de siège réversible (72) et la jointure inférieure (63), la baïonnette de siège réversible (72) et la base support de baïonnette (71) étant mobile en rotation autour du cinquième arbre pivot, les extrémités opposées de la barre de liaison du support de baïonnette (73) étant déplacées par pivotement autour de la base support de baïonnette (71) et du tube de base arrière (3) respectivement, une partie support (721) étant située sur la surface latérale de la baïonnette de siège réversible (72) la partie support (721) étant appariée à un point support (631) situé sur le tube de base avant (2), à l'état totalement déployé du cadre, le point support (631) supportant la partie support (721) de sorte que la baïonnette de siège réversible (72) ne puisse pas tourner, la base support de baïonnette (71) étant équipée d'un premier perçage de positionnement (711) et d'un second perçage de positionnement (712), et la broche de serrage d'un siège réversible étant équipée d'une colonnette de positionnement (74) appariée au premier perçage de positionnement (711) et au second perçage de positionnement (712), le second perçage de positionnement (712) étant un perçage de positionnement fermé et le premier perçage de positionnement (711) étant un perçage ouvert dont la paroi latérale est ouverte, le perçage ouvert et la baïonnette de siège réversible (72) étant combinés pour former un perçage de positionnement fermé, à l'état dans lequel le siège réversible est inséré dans la baïonnette de siège réversible (72) et la colonnette de positionnement (74) est serrée dans le second perçage de positionnement (712), au cours du repliement du cadre, le tube de base arrière (3) entraînant la base support de baïonnette (71) au moyen de la barre de liaison du support de baïonnette (73) de sorte qu'elle tourne autour du point pivot avec la jointure inférieure (63), le second perçage de positionnement (712) verrouillant la colonnette de positionnement (74) de sorte que la broche de serrage du siège réversible tourne dans la direction du tube de base arrière (3) avec la base support de baïonnette (71), dans l'état dans lequel le siège réversible est inséré dans la baïonnette de siège réversible (72) et la colonnette de positionnement (74) est serrée dans le premier perçage de positionnement (711), au cours du repliement du cadre, le tube de base arrière (3) s'approchant du tube de base avant (2) le tube de base arrière (3) entraînant la base support de baïonnette (71) au moyen de la barre de liaison du support de baïonnette (73) pour qu'elle tourne autour du point pivot avec la jointure inférieure (63) de sorte que la base support de baïonnette (71) entraîne la baïonnette de siège réversible (72) pour qu'elle tourne vers le tube de base arrière (3) de sorte que le point support (631) du tube de base avant (2) s'éloigne de la partie support (721) de la baïonnette de siège réversible (72), et la baïonnette de siège réversible (72) étant mobile par rapport au siège réversible qui s'approche automatiquement du tube de base avant (2) du fait de son poids propre.

8. Poussette conforme à la revendication 2,
**caractérisée en ce que**
la jointure supérieure (61), la jointure arrière (62), la jointure inférieure (63) et la barre de liaison de jointure (64) sont réalisées en des matières plastiques de grande dureté en acier ou en alliage d'aluminium.

9. Poussette conforme à la revendication 1,
**caractérisée en ce que**
le tube de manipulation, le tube de base avant et le tube de base arrière sont réalisés en acier ou en alliage d'aluminium, et le tube de manipulation, le tube de base avant et le tube de base arrière sont des tubes formés intégralement.
